# FASCICULE DE BREVET EUROPEEN

(11) **EP 1 151 206 B1**
(45) Date de publication et mention de la délivrance du brevet: **17.01.2007**
(21) Numéro de dépôt: 00900668.5
(22) Date de dépôt: 27.01.2000
(51) Int. Cl.: F16C 7/00, F16F 1/02, H01H 13/26

(54) **BIELLETTE POUR DISPOSITIF A GENOUILLERE, ET DISPOSITIF A GENOUILLERE COMPORTANT UNE TELLE BIELLETTE**
STANGE FÜR EINE KNIEHEBELSPANNVORRICHTUNG UND KNIEHEBELSPANNVORRICHTUNG MIT STANGE
CONNECTING ROD FOR A KNUCKLE JOINT DEVICE AND KNUCKLE JOINT DEVICE COMPRISING SAID ROD

(30) Priorité: 09.02.1999 FR 9901483
(43) Date de publication de la demande: 07.11.2001
(73) Titulaire: DOSATRON INTERNATIONAL, 33370 Tresses (Bordeaux) (FR)
(72) Inventeur: URRUTIA, Stéphane, F-33380 Baurech (FR)
(74) Mandataire: Michardière, Bernard
(86) Numéro de dépôt international: PCT/FR2000/000177
(87) Numéro de publication internationale: WO 2000/047907

(56) Documents cités:
- EP-A- 0 501 102
- DE-A- 19 518 766
- US-A- 4 141 437
- US-A- 5 479 993

## Description

L'invention est relative à une biellette pour dispositif à genouillère permettant d'assurer un maintien stable, dans l'une de deux positions, d'une première pièce relativement à une deuxième pièce.

Un tel dispositif à genouillère comporte un déclencheur articulé sur la première pièce autour d'un premier axe , la susdite biellette étant articulée d'une part sur la deuxième pièce, autour d'un deuxième axe parallèle au premier axe, et d'autre part sur le déclencheur autour d'un troisième axe parallèle aux deux autres. Lorsque le déclencheur est dans une position stable le troisième axe est situé en dehors du plan des deux premiers axes, et le passage d'une position stable à l'autre nécessite que le troisième axe franchisse le plan des deux premiers axes, avec une déformation de la biellette. Des moyens de poussée combinés avec des moyens élastiques sont en outre prévus pour assurer un changement brusque de position du déclencheur.

La biellette dans un tel dispositif, tout en étant de dimension réduite par rapport aux autres pièces, constitue un élément important dont dépend le bon fonctionnement du mécanisme à genouillère, ainsi que sa durée dans le temps.

Un tel dispositif à genouillère peut être utilisé dans des applications diverses nécessitant le passage brusque d'une position stable à une autre position stable de deux pièces relativement l'une à l'autre. Par exemple, le dispositif peut être utilisé pour commander le changement de position des clapets dans un moteur hydraulique différentiel. Un tel dispositif à genouillère peut aussi être utilisé pour d'autres applications, notamment dans le domaine des interrupteurs ou commutateurs électriques nécessitant un changement brusque de position de deux contacts électriques, ou dans d'autres mécanismes de verrouillage.

Les documents US 4 141 437 A et US 5 479 993 décrivent des ressorts à fil avec une partie centrale généralement en forme de U dont la branche inférieure transversale constitue un axe d'articulation et des branches latérales forment des ressorts de flexion et des segments de prolongation recourbés vers l'extérieur et parallèles à la branche transversale constituant des ressorts en torsion.

Du document DE 195 18 766 est connue une bielle en matière composite avec des fibres longitudinales à haute résistance mécanique noyées dans une matrice en matière plastique.

Du document EP 0 501 102 A est connue une bride de sûreté sous forme d'un fil élastique avec des branches latérales formant des arceaux.

L'invention a pour but, surtout, de fournir une biellette qui permette de simplifier la réalisation du dispositif à genouillère et d'assurer son bon fonctionnement.

L'invention est relative à un dispositif à genouillère selon la revendication 1.

La biellette selon l'invention assure ainsi un rappel élastique du déclencheur dans une position stable.

Les segments recourbés vers l'extérieur peuvent se prolonger par d'autres segments recourbés du côté opposé aux arceaux; de préférence, ces autres segments sont recourbés à angle droit, orthogonaux à la branche transversale et parallèles entre eux. Les extrémités de ces derniers segments peuvent être encastrées dans la deuxième pièce et la liberté en rotation de la biellette autour du deuxième axe est assurée par l'élasticité en torsion des segments orientés suivant le deuxième axe.

L'invention, selon la revendication 4, est également relative à une biellette pour un dispositif à genouillère telle que définie précédemment, qui est réalisée avec des fibres longitudinales à haute résistance mécanique propres à assurer une élasticité en traction et en compression des branches latérales de la biellette, ces fibres longitudinales étant noyées dans une matrice en matière plastique propre à assurer une élasticité en torsion des segments s'étendant suivant le deuxième axe.

Les fibres longitudinales peuvent être des fibres de verre ou des fibres de carbone.

L'invention consiste, mises à part les dispositions exposées ci-dessus, en un certain nombre d'autres dispositions dont il sera plus explicitement question ci-après à propos d'un exemple de réalisation décrit en détail avec référence aux dessins ci-annexés, mais qui n'est nullement limitatif.
La Figure 1, de ces dessins, est une vue en perspective d'une biellette conforme à l'invention.
La Figure 2 est une section à plus grande échelle suivant la ligne II-II de Fig.1.
La Figure 3 est une vue en coupe verticale axiale schématique d'un mécanisme comportant un dispositif à genouillère équipé de la biellette de Fig.1, le mécanisme étant représenté dans une première position stable relative de deux pièces.
La Figure 4 montre, semblablement à la Figure 3, le mécanisme dans la deuxième position stable.
La Figure 5, enfin, est une perspective éclatée des éléments situés à l'intérieur du mécanisme des Figures 3 et 4.

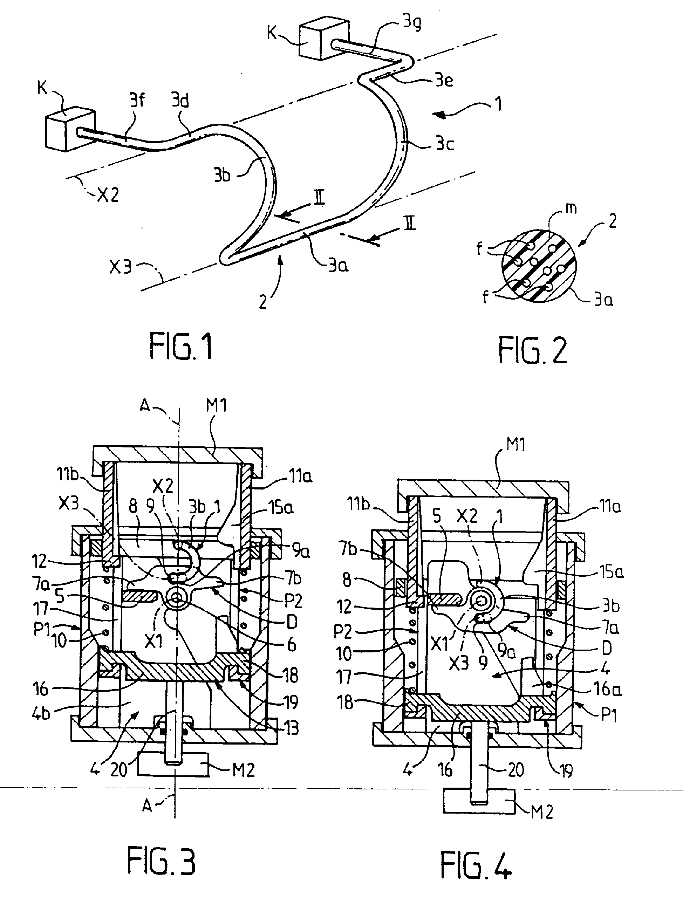

En se reportant à Fig.1, on peut voir une biellette 1 réalisée d'une seule pièce. Cette biellette 1 comporte une partie centrale 2 sensiblement en forme de U avec une branche inférieure transversale 3a, horizontale selon la représentation de Fig.1, prévue pour constituer un axe d'articulation X3 d'un déclencheur ou basculeur D (Figs 3 à 5) d'un dispositif à genouillère à trois axes X1, X2, X3.

La branche transversale 3a se raccorde, à chaque extrémité, à une branche latérale 3b, 3c sensiblement à angle droit. Chaque branche latérale 3b, 3c a sensiblement la forme d'un arc de cercle situé dans un plan orthogonal à la branche transversale 3a. Les arceaux des branches 3b, 3c sont parallèles. Ils peuvent subir une déformation élastique permettant un déplacement de la branche 3a parallèlement à elle-même , suivant une direction orthogonale à cette branche transversale 3a. Les branches latérales 3b, 3c peuvent ainsi exercer des efforts élastiques de traction et de compression suivant une direction orthogonale à la branche 3a.

Les arceaux 3b, 3c se prolongent, à leur extrémité opposée à la branche 3a, par des segments horizontaux 3d, 3e recourbés vers l'extérieur et parallèles à la branche transversale 3a. Les segments 3e, 3d présentent une certaine élasticité en torsion autour de leur axe géométrique qui constitue le deuxième axe X2 du dispositif à genouillère. L'ensemble de la branche transversale 3a et des branches latérales 3b, 3c peut ainsi osciller autour de l'axe X2 en étant rappelé par le couple de torsion développé par les segments 3d, 3e.

Les segments 3d, 3e se prolongent par d'autres segments 3f, 3g recourbés à angle droit, du côté opposé aux arceaux, parallèles entre eux et orthogonaux à la branche 3a. Ces segments 3f, 3g forment des pattes qui peuvent être fixées à leur extrémité libre dans un encastrement K, schématiquement représenté.

La biellette 1 est avantageusement réalisée avec des fibres longitudinales f (Fig.2) à haute résistance mécanique. Les fibres f sont parallèles entre elles. Elles s'étendent suivant toute la longueur de la biellette en décrivant le parcours sinueux de cette biellette. Les fibres f peuvent être, par exemple, des fibres de verre ou des fibres de carbone. Ces fibres f sont noyées dans une matrice m en matière plastique présentant une bonne élasticité en torsion.

On voit ainsi qu'au niveau des segments 3d, 3e, les fibres parallèles f n'exercent quasiment aucune résistance en torsion. C'est la matrice m qui intervient essentiellement pour les déformations en torsion dans cette zone.

Par contre, au niveau des branches latérales 3b, 3c, les fibres f travaillent en parallèle à l'égard des efforts de traction et de compression exercés sur les branches 3b, 3c.

Un exemple de dispositif à genouillère avec déclencheur D est représenté sur les Figures 3 à 5.

Sur Fig.3 on peut voir deux pièces respectivement P1 et P2, P1 formant un boîtier extérieur et P2 constituée d' une chemise cylindrique ou lanterne montée coulissante à l'intérieur de P1.

Le dispositif à genouillère est prévu pour assurer le maintien de la pièce P2 relativement à la pièce P1 dans l'une de deux positions stables, et le passage brusque d'une position stable à l'autre.

Le dispositif à genouillère comprend trois axes de rotation parallèles X1, X2, X3 perpendiculaires au plan des Figs 3 et 4.

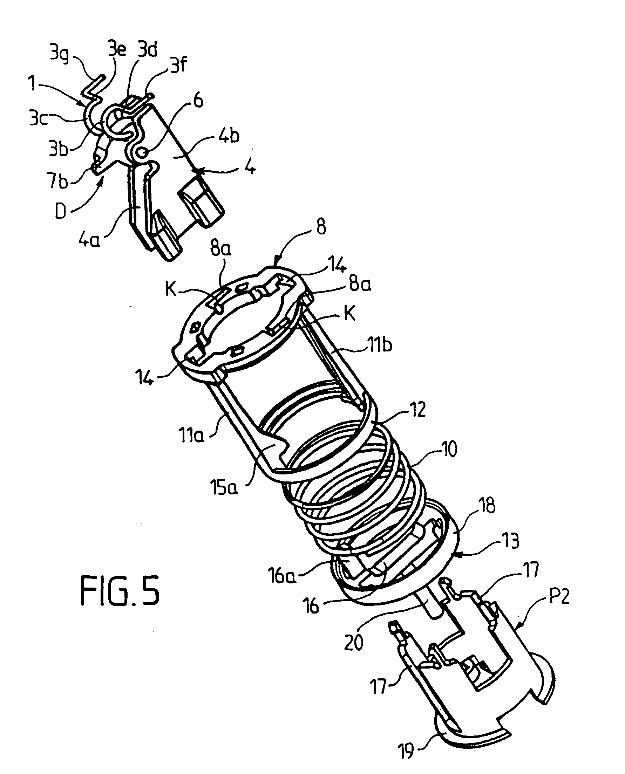

Un support 4 fixé à la pièce P1, est disposé à l'intérieur de la pièce P2. Le support 4 peut être constitué de deux plaques parallèles 4a, 4b (Fig.5) écartées l'une de l'autre présentant un contour sensiblement en forme de trapèze rectangle ; un grand côté vertical est adjacent à la surface intérieure de la pièce P2, le bord opposé à ce grand côté vertical étant incliné. Les deux plaques 4a, 4b sont reliées entre elles, dans leur partie haute, par une barrette transversale horizontale 5.

Le déclencheur D est disposé entre les plaques 4a, 4b et est articulé sur un arbre 6 dont l'axe géométrique constitue le premier axe de rotation X1. Cet arbre 6 est porté par deux paliers prévus dans les plaques 4a, 4b. L'axe X1 est situé dans un plan diamétral de la pièce P2, sensiblement à la hauteur de la barrette 5. Le déclencheur D comporte deux extensions radiales 7a, 7b dont l'épaisseur (suivant la direction perpendiculaire au plan des Figs.3 et 4) est inférieure à celle du déclencheur et qui sont décalées l'une par rapport à l'autre suivant la direction de l'arbre 6.

La biellette 1 établit une liaison articulée entre le déclencheur D et un plateau 8 de la pièce P2. Les pattes 3f, 3g de la biellette 1 sont encastrées dans le plateau 8. Par exemple les pattes 3f, 3g sont fixées, notamment par collage, dans des rainures 8a constiuant l'encastrement K dans le plateau 8. Les segments 3d, 3e de la biellette 1 sont perpendiculaires au plan de la Figure 1 et leur axe géométrique définit l'axe X2 de rotation.

Le basculeur D est traversé par un trou 9 d'axe parallèle à l'arbre 6 situé dans le plan médiateur du basculeur. Un trou 9a communiquant avec le trou 9 est prévu à côté pour faciliter le montage de la biellette 1. La branche transversale 3a de la biellette 1 est engagée dans le trou 9 et son axe géométrique définit l'axe X3 d'articulation entre le basculeur D et la biellette 1.

Deux positions stables du déclencheur D sont déterminées par sa venue en butée respectivement avec la face supérieure (Fig.3) et la face inférieure (Fig.4) de la barrette 5. On passe d'une position à l'autre par une rotation du déclencheur D d'environ 180° relativement au support 4, autour de X1.

Dans la position stable de Fig.3, les traces des trois axes X1, X2 et X3 sont aux sommets d'un triangle aplati, l'axe X3 étant légèrement à gauche par rapport au plan passant par les axes X1 et X2, X3 se trouve entre X1 et X2.

Pour franchir la position angulaire correspondant à l'alignement des trois points X1, X2, X3, le déclencheur D doit provoquer une légère déformation élastique de la biellette 1 au niveau de ses branches 3b, 3c. En effet, les pièces P1 et P2 en position stable sont généralement en butée unilatérale (par des moyens non représentés) empêchant dans le cas de Fig.3 une augmentation de la distance entre X1 et X2, et dans le cas de Fig.4 une diminution de la distance entre X1 et X2.

Sur Fig.4, X3 est passé du côté de X1 opposé à X2. Les traces des trois axes X1, X2 et X3 forment encore un triangle aplati, l'axe X3 se trouvant légèrement sur la gauche par rapport au plan X2-X1.

On voit que les pièces P2 et P1 ont changé de position relative.

Des moyens de commande sont prévus pour assurer un changement brusque de la position de Fig.3 à celle de Fig.4 et inversement.

Ces moyens de commande comprennent un ressort 10 disposé autour de la pièce P2, exerçant un effort suivant l'axe géométrique A-A de l'ensemble.

Des moyens de déclenchement comprennent deux poussoirs supérieurs 11a, 11b diamétralement opposés reliés à leur base par une bague circulaire 12, et un poussoir inférieur 13.

Les poussoirs supérieurs 11a, 11b sont guidés dans des échancrures 14 du plateau 8, la bague 12 entourant la pièce P2. Le poussoir 11a comporte une saillie radiale 15a vers l'intérieur s'étendant sur une distance suffisante pour coopérer avec l'extension 7b du déclencheur D. Le ressort 10 est en appui contre la bague 12, elle-même en appui contre la face inférieure du plateau 8.

Le poussoir inférieur 13 comporte une traverse diamétrale 16 passant par des ouvertures 17 de la paroi de la pièce P2 qui assurent le guidage en coulissement du poussoir 13. La traverse 16 est solidaire d'un anneau 18 entourant la partie inférieure de la pièce P2 et prenant appui axial contre une collerette 19 de cette pièce P2. Des ouvertures sensiblement semi-circulaires (Fig.5) existent entre la traverse 16 et le contour intérieur de l'anneau 18, permettant le passage des plaques 4a, 4b.

La traverse 16 est munie d'une tige 20 coaxiale à la pièce P2 qui traverse une ouverture centrale du fond de la pièce P1.

La traverse 16 comporte d'un côté une saillie 16a vers le haut propre à coopérer avec l'extension 7a du déclencheur dans la position de Fig.4.

Ceci étant, le fonctionnement du dispositif à genouillère est le suivant.

On supposera que la pièce P1 est maintenue fixe, mais les explications qui suivent restent valables si cette pièce P1 est animée d'un mouvement qui est transmis à la pièce P2.

A partir de la configuration représentée sur Fig.3, correspondant à une première position stable, il suffit d'exercer une pression sur les poussoirs 11a, 11b, par exemple à l'aide d'une pièce M1 coiffant ces deux poussoirs, pour provoquer la descente des poussoirs 11a, 11b en comprimant le ressort 10 jusqu'à ce que la saillie 15a vienne agir sur l'extension 7b du déclencheur.

Celui-ci est alors entraîné en rotation dans le sens d'horloge autour de l'axe X1.

Le franchissement de la position alignée des traces des axes X2, X1 et X3 a lieu au prix d'une déformation élastique des arceaux 3b, 3c ainsi que d'une rotation d'amplitude limitée autour de l'axe X2.

Après franchissement de la position alignée, le ressort 10 se détend et provoque la rotation brusque du déclencheur D dont l'extension 7b vient en appui sous la butée 5, la pièce P2 occupant alors la deuxième position stable illustrée sur Fig.4 relativement à la pièce P1.

Pour revenir dans la position illustrée sur Fig.3, il suffit d'appuyer sur la tige 20, munie par exemple d'un bouton M2, pour provoquer le basculement du déclencheur D par action de la saillie 16a contre l'extension 7a.

La biellette 1, comme déjà expliqué, assure une double fonction élastique d'une part en traction, compression pour le verrouillage du système, par l'action des branches 3b, 3c, d'autre part par l'élasticité en torsion des segments 3e, 3d maintenant l'ensemble dans la position verrouillée.

Un tel dispositif à genouillère peut convenir pour tout mécanisme nécessitant de faire passer une pièce P2 d'une première position stable à une deuxième position stable relativement à une pièce P1.

## Revendications

1. Dispositif à genouillère prévu entre une première (P1) et une deuxième (P2) pièces pouvant se déplacer l'une par rapport à l'autre, et permettant d'assurer deux positions stables de ces pièces, ce dispositif comportant un déclencheur (D) articulé sur la première pièce (P1) autour d'un premier axe (X1), une biellette articulée d'une part sur la deuxième pièce (P2), autour d'un deuxième axe (X2) parallèle au premier axe, et d'autre part sur le déclencheur (D) autour d'un troisième axe (X3) parallèle aux deux autres,
les trois axes (X1,X2,X3) étant aux sommets d'un triangle aplati dans chaque position stable, et le passage d'une position stable à l'autre nécessitant de franchir une position d'alignement des traces des trois axes (XI,X2,X3), le déclencheur devant provoquer une déformation élastique de la biellette,
des moyens de poussée combinés avec des moyens élastiques étant en outre prévus pour assurer un changement brusque de position du déclencheur,
dispositif à genouillère dans lequel la biellette (1) comporte une partie centrale (2) sensiblement en forme de U dont la branche inférieure transversale (3a) est prévue pour constituer le troisième axe d'articulation (X3) du déclencheur (D), cette branche inférieure (3a) se raccordant sensiblement à angle droit à des branches latérales formant des arceaux (3b, 3c) situés dans un plan orthogonal à la branche transversale (3a) et pouvant se déformer élastiquement, ces arceaux (3b,3c) se prolongeant par des segments (3d,3e) recourbés vers l'extérieur et parallèles à la branche transversale, ces segments (3d,3e) présentant une élasticité en torsion autour de leur axe géométrique de manière à exercer un rappel en rotation sur les branches latérales (3b,3e) autour de cet axe géométrique confondu avec le deuxième axe (X2).

2. Dispositif selon la revendication 1, **caractérisé par le fait que** les segments recourbés (3d,3e) se prolongent par d'autres segments (3f, 3g) recourbés à angle droit du côté opposé aux arceaux, les extrémités des autres segments recourbés (3f,3g) étant encastrées dans la deuxième pièce (P2) et la liberté en rotation de la biellette autour du deuxième axe (X2) est assurée par l'élasticité en torsion des segments (3d,3e) orientés suivant le deuxième axe.

3. Dispositif selon la revendication 1 ou 2, **caractérisé par le fait que** les autres segments (3f,3g) sont recourbés à angle droit , orthogonaux à la branche transversale (3a) et parallèles entre eux.

4. Biellette pour un dispositif selon l'une des revendications précédentes, **caractérisée par le fait qu'**elle est réalisée avec des fibres longitudinales (f) à haute résistance mécanique propres à assurer une élasticité en traction et en compression des branches latérales de la biellette, ces fibres longitudinales étant noyées dans une matrice (m) en matière plastique propre à assurer une élasticité en torsion des segments s'étendant suivant le deuxième axe.

5. Biellette selon la revendication 4, **caractérisée par le fait que** les fibres longitudinales (f) sont des fibres de verre ou des fibres de carbone.

## Claims

1. Toggle-joint device provided between a first (P1) and a second (P2) components, movable the one with respect to the other, and allowing to keep two stable positions of these components, this device comprising a trigger (D) articulated to the first component (P1) about a first axis (X1), a connecting rod being articulated, on the one hand, to the second component (P2) about a second axis (X2) parallel to the first axis and, on the other hand, to the trigger (D) about a third axis (X3) parallel to the other two,
the three axes (X1,X2,X3) being at the vertices of a flattened triangle in each stable position, and the passage from a stable position to the other requesting to pass through a position where the three points of the axes (X1,X2,X3) are aligned, the trigger having to cause an elastic deformation of the connecting rod,
thrusting means combined with elastic means being also provided to cause the trigger to change position abruptly,
toggle-joint in which the connecting rod (1) has an essentially U-shaped central part (2), the transverse lower branch (3a) of which is designed to form the third axis of articulation (X3) of the trigger (D), this lower branch (3a) connecting substantially at right angles to lateral branches forming bows (3b, 3c) lying in a plane orthogonal to the transverse branch (3a), capable of elastic deformation, these bows (3b, 3c) continuing in the form of segments (3d, 3e) bent outward and parallel to the transverse branch, these segments (3d, 3e) having elasticity in torsion about their geometric axis so as to exert a rotational return force on the lateral branches (3b, 3e) about this geometric axis which is coincident with the second axis (X2).

2. Device according to claim 1, **characterized in that** the bent segments (3d, 3e) are continued by other segments (3f,3g) bent at right angle on the side opposite to the bows, the ends of the other segments (3f, 3g) being set into the second element (P2) and the rotation freedom of the connecting rod around the second axis (X2) being provided by the torsional elasticity of the segments (3b, 3e) directed along the second axis.

3. Device according to claim 1 or 2, **characterized in that** the other segments (3f, 3g) are bent at right angles, are orthogonal to the transverse branch (3a) and are parallel to one another.

4. Connecting rod for a device according to one of the preceding claims, **characterized in that** it is made with longitudinal fibers (f) of high mechanical strength capable of providing the lateral branches of the connecting rod with tensile and compressive elasticity, these longitudinal fibers being embedded in a plastic matrix (m) capable of providing the segments that extend along the second axis with torsional elasticity.

5. Connecting rod according to claim 4, **characterized in that** the longitudinal fibers (f) are glass fibers or carbon fibers.

## Patentansprüche

1. Kniehebelvorrichtung, die zwischen einem ersten (P1) und einem zweiten Teil (P2) vorgesehen ist, welche sich relativ zueinander verschieben können, und welche zwei stabile Positionen dieser Teile gewährleistet, wobei die Vorrichtung einen an dem ersten Teil (P1) um eine erste Achse (X1) angelenkten Auslöser (D), und eine einerseits an dem zweiten Teil (P2) um eine zu der ersten Achse parallele zweite Achse (X2) und andererseits um eine zu den beiden anderen Achsen parallele dritte Achse (X3) an dem Auslöser (D) angelenkte Stange aufweist,
wobei die drei Achsen (X1, X2, X3) sich in jeder stabilen Position an den Spitzen eines abgeflachten Dreiecks befinden, und der Übergang von einer stabilen Position in eine andere das Überwinden einer Position erfordert, in welcher die Verläufe der drei Achsen (X1, X2, X3) fluchten, wobei der Auslöser eine elastische Verformung der Stange bewirken muss,
wobei ferner Druckeinrichtungen, die mit elastischen Einrichtungen kombiniert sind, vorgesehen sind, um eine plötzliche Änderung der Position des Auslösers zu gewährleisten,
**dadurch gekennzeichnet, dass** bei der Kniehebelvorrichtung die Stange (1) einen im wesentlichen U-förmigen Mittelteil (2) aufweist, dessen untere Querstrebe (3a) zur Bildung der dritten Gelenkachse (X3) des Auslösers (D) vorgesehen ist, wobei die untere Strebe (3a) im wesentlichen rechtwinklig mit seitlichen Schenkeln verbunden ist, welche Bögen (3b, 3c) bilden, die sich in einer zu der querverlaufenden Strebe (3a) orthogonalen Ebene befinden und elastisch verformbar sind, wobei die Bögen (3b, 3c) durch nach außen gebogene und zu der querverlaufenden Strebe parallele Segmente (3d, 3e) verlängert sind, wobei die Segmente (3d, 3e) eine Torsionselastizität um ihre geometrische Achse aufweisen, so daß sie eine Drehrückstellkraft auf die seitlichen Schenkel (3b, 3c) um diese mit der zweiten Achse (X2) zusammenfallende geometrische Achse aufbringen.

2. Vorrichtung nach Anspruch 1, **dadurch gekennzeichnet, dass** die gebogenen Segmente (3d, 3e) durch andere rechtwinklig gebogene Segmente (3f, 3g) auf der den Bögen entgegengesetzten Seite verlängert sind, wobei die Enden der anderen gebogenen Segmente (3f, 3g) in das zweite Teil (P2) eingelassen sind und die Drehfreiheit der Stange um die zweite Achse (X2) durch die Torsionselastizität der entlang der zweiten Achse ausgerichteten Segmente (3d, 3e) gewährleistet ist.

3. Vorrichtung nach Anspruch 1 oder 2, **dadurch gekennzeichnet, dass** die anderen Segmente (3f, 3g) rechtwinklig gebogen, orthogonal zu der querverlaufenden Strebe (3a) und zueinander parallel sind.

4. Stange für eine Vorrichtung nach einem der vorhergehenden Ansprüche, **dadurch gekennzeichnet, dass** sie aus längsgerichteten Fasern (f) mit hoher mechanischer Festigkeit gebildet ist, welche geeignet sind, die Zug- und Druckelastizität der seitlichen Schenkel der Stange zu gewährleisten, wobei die längsgerichteten Fasern in eine Matrix (m) aus Kunststoff eingebettet sind, welche die Torsionselastizität der sich entlang der zweiten Achse erstreckenden Segmente gewährleistet.

5. Stange nach Anspruch 4, **dadurch gekennzeichnet, dass** die längsgerichteten Fasern (f) Glasfasern oder Kohlestofffasern sind.
